**Europäisches Patentamt**

**European Patent Office**

**Office européen des brevets**

(19)

(11) **EP 0 728 340 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(21) Anmeldenummer: **95912238.3**

(22) Anmeldetag: **10.03.1995**

(51) Int Cl.$^7$: **G06K 7/10**

(86) Internationale Anmeldenummer:
**PCT/EP95/00893**

(87) Internationale Veröffentlichungsnummer:
**WO 95/27257 (12.10.1995 Gazette 1995/43)**

(54) **OPTOELEKTRONISCHE VORRICHTUNG ZUM ERKENNEN VON KONTRASTMARKEN**

OPTO-ELECTRONIC DEVICE FOR RECOGNISING CONTRAST MARKS

DISPOSITIF OPTOELECTRONIQUE POUR L'IDENTIFICATION DE MARQUES DE CONTRASTE

(84) Benannte Vertragsstaaten:
**CH DE FR GB IT LI NL**

(30) Priorität: **30.03.1994 DE 4411023**

(43) Veröffentlichungstag der Anmeldung:
**28.08.1996 Patentblatt 1996/35**

(73) Patentinhaber: **Leuze electronic GmbH + Co.**
**73277 Owen/Teck (DE)**

(72) Erfinder:
• **KEINATH, Armin, Dr.**
**D-72581 Dettingen (DE)**
• **WÖRNER, Jörg**
**D-70794 Filderstadt (DE)**

(74) Vertreter: **Ruckh, Rainer Gerhard, Dr.**
**Fabrikstrasse 18**
**73277 Owen/Teck (DE)**

(56) Entgegenhaltungen:
**EP-A- 0 223 131    EP-A- 0 433 593**
**WO-A-95/12861**

• **IBM TECHNICAL DISCLOSURE BULLETIN, Bd. 23, Nr. 3, August 1981 USA, Seite 1428 'FACET DEPENDANT DIGITAL FILTER'**
• **TELECOMMUNICATIONS AND RADIO ENGINEERING, Bd. 27/28, Nr. 10, Oktober 1974 Seiten 90-93, TRAKHTMAN,V.A. 'DISCRETE MATCHED FILTER FOR SIGNALS IN THE FORM OF WALSH FUNCTIONS'**
• **COMPUTER DESIGN, Bd. 19, Nr. 3, März 1980 CONCORD, Seiten 137-142, FINN,W.J. 'LSI HARDWARE IMPLEMENTS SIGNAL PROCESSING ALGORITHMS'**
• **PROCEEDINGS OF THE 1988 IEEE INTERNATIONAL CONFERENCE ON SYSTEMS,MAN AND CYBERNETICS, Bd. 2, August 1988 BEIJING AND SHENYANG,CHINA, Seiten 901-905, XP 000106255 SHIXUE CAI AND DUBES,R.C. 'EDGE DETECTION WITH MATCHED FILTERS'**

**Beschreibung**

Die Erfindung betrifft eine Vorrichtung gemäß dem Oberbegriff des Anspruchs 1 und ein Verfahren gemäß dem Oberbegriff des Anspruchs 9.

Eine Vorrichtung dieser Art ist aus der EP 0 433 593 A2 bekannt. Die Vorrichtung ist als Barcode-Lesegerät zum Abtasten von Barcode-Symbolen ausgebildet.

Die Barcode-Symbole bestehen aus einer Folge von hellen und dunklen Linienelementen vorgegebener Breite. Die Barcode-Symbole werden von der Vorrichtung mittels eines Sendelichtstrahls, vorzugsweise eines Laserstrahls, abgetastet. Der Sendelichtstrahl weist einen mittleren Durchmesser entsprechend seiner räumlichen Intensitätsverteilung senkrecht zur Ausbreitungsrichtung auf. Bei Laserstrahlen entspricht die räumliche Intensitätsverteilung idealerweise einer Gaußverteilung.

Der Durchmesser des Sendelichtstrahls variiert mit dem Abstand zur Vorrichtung entsprechend der Sendeoptik, die dem Sendeelement vorgeschaltet ist. In der Brennebene des Sendelichtstrahls ist der Durchmesser des Sendelichtstrahls üblicherweise erheblich kleiner als die Breite der Linienelemente. Demzufolge ist die Amplitudenmodulation des Empfangssignals nahezu identisch mit den Breiten der Linienelemente des Barcode-Symbols, so daß dieses von der Vorrichtung sicher erkannt werden kann.

Mit zunehmender Entfernung des Barcode-Symbols von der Brennebene des Sendelichtstrahls wird der Durchmesser des Sendelichtstrahls rasch größer. Sobald der Durchmesser des Sendelichtstrahls von gleicher Größenordnung wie die Breiten der Linienelemente der Barcode-Symbole ist, wird die Modulation des Empfangssignals durch die Breite des Sendelichtstrahls so beeinflußt, daß eine sichere Detektion des Barcode-Symbols erschwert wird oder nicht mehr möglich ist.

Wie in der EP 0 433 593 A2 ausgeführt wird, werden mit größer werdendem Durchmesser des Sendelichtstrahls die hochfrequenten Anteile des modulierten Empfangssignals, die von den schmalen Linienelementen des Barcode-Symbols stammen, zunehmend unterdrückt.

Werden die Amplituden der hochfrequenten Anteile de: Empfangssignals im Verhältnis zu den Amplituden der niederfrequenten Anteile des Empfangssignals zu stark unterdrückt, kann das Barcode-Symbol von der Vorrichtung nicht mehr gelesen werden.

Um diesen Effekt zu kompensieren, ist in der Vorrichtung gemäß der EP 0 433 593 A2 ein analoges Filter vorgesehen, mit dem das analoge Empfangssignal so gefiltert wird, daß die hochfrequenten Komponenten stärker als die niederfrequenten Komponenten verstärkt werden.

Zur Festlegung der Übertragungscharakteristik des Filters werden vier Frequenzen $f_0$, $f_1$, $f_2$ und $f_3$ definiert.

In den Bereichen zwischen zwei benachbarten Frequenzen wird jeweils ein bestimmter Verstärkungsfaktor gewählt, wobei die Verstärkungsfaktoren mit zunehmender Frequenz größer werden. Die Übertragungscharakteristik des Filters kann für einen bestimmten Durchmesser des Sendelichtstrahls fest eingestellt werden. Alternativ kann die Übertragungsfunktion des Filters durch Verschieben der Frequenzen $f_0$, $f_1$, $f_2$ und $f_3$ verändert werden.

Diese Verschiebung erfolgt zweckmäßigerweise in Abhängigkeit der Frequenz die den schmalen Linienelementen des Barcode-Symbols entspricht.

Ein wesentlicher Nachteil dieser Vorrichtung besteht in der groben Einteilung des Frequenzspektrums des Empfangssignals. Dadurch kann der Einfluß des Sendelichtstrahldurchmessers auf die Modulation des Empfangssignals nur unvollständig erfaßt werden. Entsprechend kann das Empfangssignal mittels des analogen Filters nur begrenzt optimiert werden.

Ein weiterer Nachteil dieser Vorrichtung besteht darin, daß die Übertragungsfunktion des analogen Filters nur für einen bestimmten Abstand optimiert werden kann. Bei verschiedenen Leseabständen müssen die Frequenzen $f_0$, $f_1$, $f_2$ und $f_3$ verändert werden, wobei die Änderung der Frequenzen mittels eines zusätzlichen Sensorsystems erfolgt, das beispielsweise die Signal-Frequenzen der von den schmalen Linien stammenden Empfangssignale mißt. Dies bedeutet einen beträchtlichen zusätzlichen Schaltungsaufwand.

Aus der WO 95/12861 ist als nicht vorveröffentlichter Stand der Technik eine optoelektronische Vorrichtung gemäß dem Oberbegriff des Anspruchs 1 bekannt. Das analoge Empfangssignal am Ausgang des Empfangselements wird in einem n-bit-Analog-Digital Wandler, dessen Wortbreite n größer als eins ist, in ein digitales Empfangssignal umgesetzt und einem digitalen Filter zugeführt. Im Unterschied zur erfindungsgemäßen Vorrichtung ist die Übertragungsfunktion des digitalen Filters so gewählt, daß die Verknüpfung dieser Übertragungsfunktion mit der Verknüpfung der Übertragungsfunktion der signalverzerrenden Bauelemente der Vorrichtung eine im wesentlichen frequenzunabhängige Durchlaßcharakteristik der Gruppenlaufzeit des Empfangssignals und eine gaußförmige Durchlaßcharakteristik der Amplitude des Empfangssignals ergibt.

Der Erfindung liegt die Aufgabe zugrunde, eine Vorrichtung der eingangs genannten Art so auszubilden, daß die Marken innerhalb eines großen Lesebereichs sicher erkannt werden können.

Zur Lösung dieser Aufgabe sind die Merkmale der Ansprüche 1 und 9 vorgesehen.

Vorteilhafte Ausführungsformen und zweckmäßige Weiterbildungen der Erfindung sind in den Ansprüchen 2 - 8 sowie 10 - 16 beschrieben.

Der Grundgedanke der Erfindung besteht darin, die Störungen des Empfangssignals, die insbesondere durch das Empfangselement und durch den endlichen Durchmesser des Empfangslichtstrahls verursacht werden. systematisch und vollständig zu erfassen und mittels des digitalen Filters zu kompensieren.

Hierfür ist dem Empfangselement ein n-bit Analog-Wandler nachgeschaltet, der das analoge Empfangssignal in ein digitales Signal umwandelt. Die Auflösung des Analog-Digitalwandlers d.h. dessen Wortbreite ist zweckmäßigerweise möglichst groß zu wählen. Dadurch wird ein Informationsverlust bei der Wandung des Analogsignals in ein Digitalsignal weitgehend vermieden.

Die Kompensation der Verzerrungen des Empfangssignals erfolgt durch eine geeignete Wahl der Übertragungsfunktion des digitalen Filters, dem das digitalisierte Empfangssignals zugeführt wird.

Bei der Bestimmung der Übertragungsfunktion des digitalen Filters werden die Übertragungsfunktionen der signalverzerrenden Bauelemente, insbesondere des Empfangselements, sowie das Frequenzspektrum der räumlichen Intensitätsverteilung des Empfangslichts berücksichtigt. Dadurch können die Störeinflüsse über den gesamten Frequenzbereich genau erfaßt und kompensiert werden, wodurch die Geometrie der Hell-Dunkelflächen der Marken sehr präzise aus den Amplitudenverlauf des Empfangssignals rekonstruiert werden kann.

Gemäß dem erfindungsgemäßen Verfahren werden die einstellbaren Koeffizienten des digitalen Filters über ein zweckmäßigerweise rechnergestütztes Variationsverfahren erhalten. Dabei erfolgt die Variation der Koeffizienten des Filters bis das Empfangssignal innerhalb einer vorgegebenen Genauigkeit mit dem tatsächlichen Kontrastmuster der Marken übereinstimmt.

Die Variation der Koeffizienten des digitalen Filters kann für einen vorgegebenen Leseabstand der Marken zur Vorrichtung und für ein vorgegebenes Kontrastmuster einer Marke erfolgen.

In einer besonders vorteilhaften Ausführungsform der Erfindung wird die Variation der Koeffizienten des digitalen Filters für einen vorgegebenen Bereich des Leseabstands durchgeführt. Zusätzlich wird die Variation auf verschiedene Kontrastmuster der Marken ausgedehnt.

Dadurch wird erreicht, daß verschiedene Marken nicht nur bei einem Leseabstand sondern in einem ausgedehnten Lesebereich sicher erkannt werden können. Dadurch wird die Verfügbarkeit der Vorrichtung ohne Erhöhung des Schaltungsaufwands beträchtlich erhöht.

In einer weiteren vorteilhaften Ausführungsform der Erfindung werden die Übertragungsfunktionen des Empfangselements oder ggf. weiterer signalverzerrender Bauelemente innerhalb einer vorgegebenen Bandbreite bei der Variation der Koeffizienten der signalverzerrenden Bauelemente vorgegeben.

Diese Bandbreiten entsprechen zweckmäßigenveise den Exemplarstreuungen der Bauelemente.

Auf diese Weise braucht die Variation de; Koeffizienten des digitalen Filters nicht für jede Vorrichtung einzeln durchgeführt werden, sondern nur einmal für eine gesamte Serie von Vorrichtungen.

Auf diese Weise wird der Aufwand bei der Prüfung und Einstellung der Vorrichtung erheblich gesenkt, wodurch der Kostenaufwand für die Vorrichtung reduziert werden kann.

Die Erfindung wird im nachstehenden anhand der Zeichnungen erläutert. Es zeigen:

Fig. 1: einen Prinzipaufbau der optoelektronischen Vorrichtung,

Fig. 2: ein Blockschaltbild der Auswerteeinheit der optoelektronischen Vorrichtung,

Fig. 3: ein Impulsdiagramm der Signalauswertung in der Schwellwerteinheit mit:

  a) Darstellung eines Barcode-Symbols,
  b) Empfangssignal am Eingang der Schwellwerteinheit,
  c) differenziertes Empfangssignal,
  d) binäre Empfangssignalfolge am Ausgang der Schwellwerteinheit,

Fig. 4: ein Blockschaltbild eines FIR-Filters,

Fig. 5: Ablaufschema zur Bestimmung der Koeffizienten des digitalen Filters,

Fig. 6: Zeitabhängigkeit der Koeffizienten des digitalen Filters während der Variation der Koeffizienten,

Fig. 7: Koeffizienten des digitalen Filters nach Ablauf der Variation der Koeffizienten,

Fig. 8: Übertragungsfunktion des optimierten digitalen Filters,

Fig. 9: Dekodiersicherheit der Vorrichtung mit bzw. ohne optimiertem digitalen Filter.

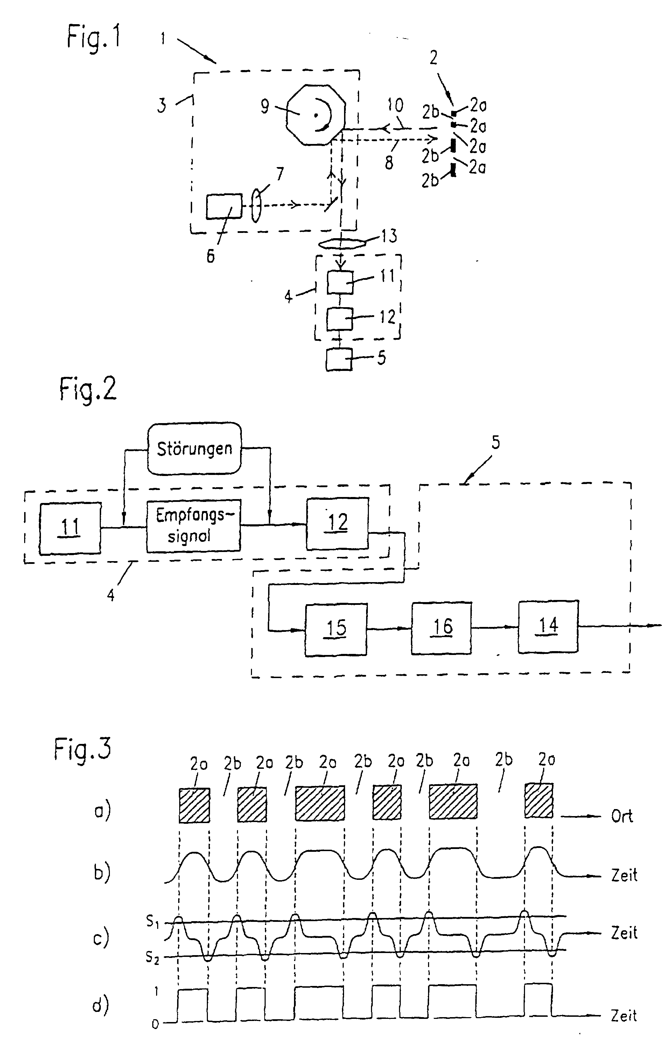

In Fig. 1 ist der prinzipielle Aufbau einer optoelektronischen Vorrichtung 1 zum Erkennen von mit definierten Kontrastmustern versehenen Marken dargestellt. Prinzipiell können die Marken beliebige Folgen und Formen von einander angrenzenden Hell- Dunkelflächen, vorzugsweise Schwarz-Weiß-Flächen, aufweisen. Im folgenden soll die Erfindung für den Fall erläutert werden, daß die Marken von Barcode-Symbolen 2 gebildet sind. Die Barcode-Symbole 2 bestehen im wesentlichen aus einer Folge von schwarzen und weißen Linienelementen 2a, b definierter Länge und Breite.

Die optoelektronische Vorrichtung 1 besteht im wesentlichen aus einem Sendeelement 3, einem Empfangselement 4 sowie einer Auswerteeinheit 5. Das Sendeelement 3 besteht aus einem Sender 6, vorzugsweise einer Laserdiode, sowie aus einer dem Sender 6 vorgeschalteten Sendeoptik 7 zur Fokussierung des Sendelichts 8. Das fokussierte Sendelicht 8 wird über eine Ablenkeinheit 9, die im vorliegenden Ausführungsbeispiel von einem rotierenden Polygonspiegelrad gebildet ist, abgelenkt und über das zu detektierende Barcode-Symbol 2 geführt. Die Drehachse des Polygonspiegelrads ist senkrecht zur in Fig. 1 dargestellten Äquatorialebene des Polygonspiegelrads angeordnet.

Das vom Barcode-Symbol 2 reflektierte Empfangslicht 10 wird über das Polygonspiegelrad zum Empfangselement 4 geführt. Das Empfangselement 4 besteht aus einer Fotodiode 11, in der das Empfangslicht 10 in ein elektronisches Empfangssignal gewandelt wird, und einem dieser nachgeschalteten Verstärker 12. Zur Verbesserung der Nachweisempfindlichkeit ist dem Empfangselement 4 eine Empfangsoptik 13 vorgeschaltet.

Das am Ausgang des Empfangselements 4 anstehende Empfangssignal wird der Auswerteeinheit 5 zugeführt.

Aus Fig. 3 ist das Prinzip der Auswertung der Empfangssignale ersichtlich. In Fig. 3a ist ein Barcode-Symbol 2 mit einer Folge von schwarzen und weißen Linienelementen 2a, b dargestellt. Falls der Durchmesser des Sendelichtstrahls 8 auf dem Barcode-Symbol 2 wesentlich kleiner als die kleinste Breite eines Linienelements 2a, b ist, wird das Sendelicht 8 durch die Reflexion von dem Barcode-Symbol 2 wie in Fig. 3b dargestellt amplitudenmoduliert.

Falls im Empfangselement 4 keine Verzerrungen oder Verfälschungen des Empfangssignals erfolgt, entspricht der in Fig. 3b dargestellte Kurvenverlauf dem am Ausgang des Empfangselements 3 anstehenden Empfangssignal.

Die Bestimmung der Breite der einzelnen Linienelemente 2a, b des Barcode-Symbols 2 in der Auswerteeinheit 5 erfolgt zweckmäßigerweise nach dem Wendepunktverfahren.

In einem ersten Schritt wird das Empfangssignal differenziert (Fig. 3c).Anschließend werden die Extrema des differenzierten Empfangssignals bestimmt, die den Wendepunkten des Empfangssignals entsprechen. Diese Wendepunkte wiederum definieren die Übergänge von einem schwarzen zu einem weißen Linienelement 2a, b bzw. umgekehrt.

Zur Bestimmung der Wendepunkte des Empfangssignals wird das differenzierte Empfangssignal mit vorzugsweise zwei Schaltschwellen $S_1$ und $S_2$ (Fig. 3c) in eine binäre Signalfolge (Fig. 3d) umgewandelt. Die Dauer der Zustände '0' und '1' der binären Signalfolge ist ein Maß für die Breite der Linienelemente 2a, b des Barcode-Symbols 2. Die Dauer der Zustände '0' und '1' kann über einen taktgesteuerten Zähler einfach erfaßt werden.

Mit größer werdendem Durchmesser des Sendelichtstrahls 8 bzw. zunehmenden Signalverzerrungen im Empfangselement 4 werden auch die Kantenfehler grösser, d.h. die Wendepunkte des Empfangssignals fallen mit den Ortskoordinaten der Schwarz-Weiß-Übergänge des Barcode-Symbols 2 nicht mehr zusammen. Im Extremfall kann dadurch ein Barcode-Symbol 2 nicht mehr erkannt werden.

Ein Maß für die Abweichung des Empfangssignals vom tatsächlichen Kontrastmuster bildet die sogenannte Dekodiersicherheit DS.

Bei einem idealen Barcode-Lesegerät ohne signalverzerrende Bauelemente und mit einem unendlich scharf fokussierten Sendelichtstrahl 8 ergibt sich eine vollkommene Übereinstimmung der Lagen der Wendepunkte des Empfangssignals und der Lagen der Schwarz-Weiß-Übergänge des Barcode-Symbols 2. Dies entspricht dem Wert DS = 1. Ein Barcode-Symbol 2 kann von der Vorrichtung 1 mit Sicherheit erkannt werden.

Mit größer werdenden Störeinflüssen werden die Unterschiede zwischen den Lagen der Wendepunkte des Empfangssignals und den Lagen der Schwarz-Weiß-Übergänge des Barcode-Symbols 2 größer, d. h. die Dekodiersicherheit DS wird kleiner.

Bei einem realen Barcode-Lesegerät können die bauteilbedingten Störeinflüsse oder der Durchmesser des Sendelichtstrahls 8 so groß sein, daß Linienelemente 2a, b des Barcode-Symbols 2 mit unterschiedlichen Breitenverhältnissen zu einem Empfangssignal mit äquidistanten Wendepunktabständen führen. In diesem Fall können Linienelemente 2a, b unterschiedlicher Breite nicht mehr erkannt werden. Die Dekodiersicherheit beträgt in diesem Fall DS = 0.

Zur Elimination dieser Signalverzerrungen d. h. zur Erhöhung der Dekodiersicherheit ist in der Auswerteeinheit 5 der Schwellwerteinheit 14 der Analog-Digitalwandler 15 und das digitale Filter 16 vorgeschaltet.

Der n-bit-Analog-Digitalwandler 15 weist eine Wortbreite im Bereich von n = 8 - 12 auf. Im vorliegenden Ausführungsbeispiel wird ein 10-bit-Analog-Digitalwandler 15 verwendet. Dadurch kann das analoge Empfangssignal mit einer hohen Auflösung in ein digitalisiertes Empfangssignal gewandelt werden.

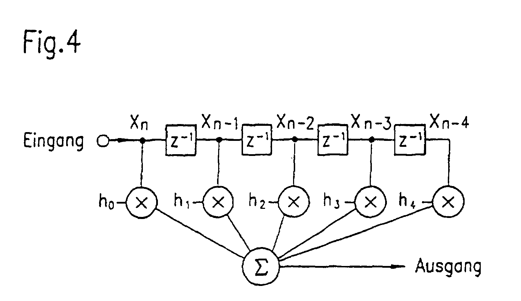

Das digitale Filter 16 ist von einem nicht rekursiven FIR-Filter gebildet. Der prinzipielle Aufbau eines FIR-Filters ist in Fig. 4 dargestellt. Die Ausgangsgröße $y_n$ des FIR-Filters hängt von der Eingangsgröße $x_m$ (m = n, n - 1, n - 2 ..., n-M) zu verschiedenen Zeitpunkten m ab.

$$Y_s = \sum_{m=0}^{M} h_m \, x_{n-m}$$

Die in Fig. 4 dargestellte Variable z ist die zur Zeitvariablen n konjungierte Variable im Frequenzbereich. Die Größe $z^{-1}$ stellt den Betrag der Verzögerung zwischen zwei Verknüpfungspunkten, z.B. $x_n$ und $x_{n-1}$, dar. Die Symbole x bzw. Σ charakterisieren eine multiplikative bzw. additive Verknüpfung.

Die Gewichtung der Eingangsgrößen $x_m$ erfolgt mit einstellbaren Koeffizienten $h_m$. Die Anzahl der Koeffizienten $h_m$ bestimmt den Grad des Filters. Im vorliegenden Ausführungsbeispiel wird ein FIR-Filter 18. Grades verwendet.

Das digitalisierte und gefilterte Empfangssignal wird der Schwellwerteinheit 14 zugeführt und dort in eine binäre Signalfolge umgewandelt.

Erfindungsgemäß ist die Übertragungsfunktion des digitalen Filters 16 so ausgestaltet, daß Signalverzerrungen des Empfangssignals, die durch Bauelemente oder durch den endlichen Durchmesser des Sendelichtstrahls 8 hervorgerufen werden, eliminiert werden können.

Diese Störgrößen sind jedoch keine Konstanten, sondern hängen von mehreren externen Faktoren ab. Der Einfluß des Sendestrahldurchmessers 8 auf die Dekodiersicherheit hängt vom Verhältnis des Durchmessers zu den Breiten der Linienelemente 2a, b des Barcode-Symbols 2 ab. Ferner hängt der Durchmesser des Sendelichtstrahls 8 vom Abstand d des Barcode-Symbols 2 zur Vorrichtung 1 ab. Schließlich beeinflußt die Ausbildung der signalverzerrenden Bauelemente die Größe der Störsignale.

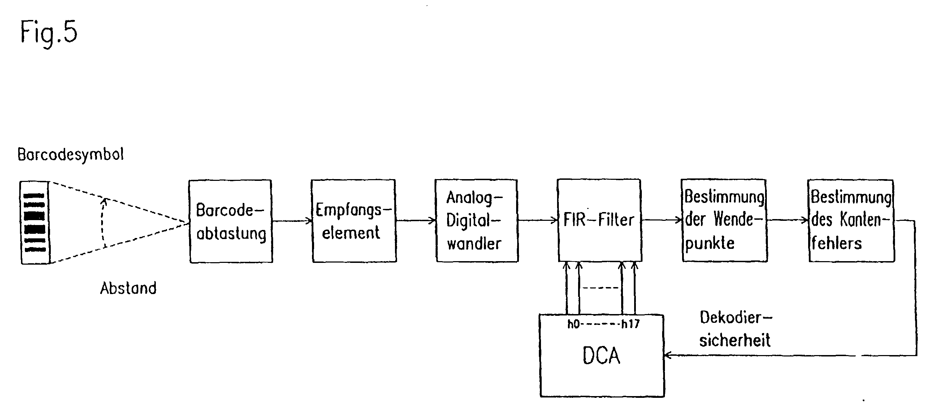

Bei der Bestimmung der Koeffizienten $h_m$ des digitalen Filters 16 sind diese Einflußgrößen erfindungsgemäß im Rahmen eines Gesamtmodells für die Vorrichtung 1 berücksichtigt. Auf der Basis dieses Gesamtmodells werden die Koeffizienten über eine systematische Variation ermittelt. Das Ablaufschema zur Bestimmung der Koeffizienten $h_m$ des digitalen Filters 16 ist in Fig. 5 dargestellt.

Das Barcode-Lesegerät ist an eine nicht dargestellte Rechnereinheit angeschlossen und detektiert in vorgegebenen Abständen d Barcode-Symbole 2, die Linienelemente 2a, b mit definierten Breitenverhältnissen aufweisen.

Das durch die Abtastung des Barcode-Symbols 2 auf das Empfangselement 4 auftreffende Empfangslicht 10 wird dort in das Empfangssignal gewandelt. Dieses Empfangssignal weist Signalverzerrungen auf, die durch das Empfangselement 4 und durch den endlichen Durchmesser des Sendelichtstrahls 8 verursacht werden.

Dadurch enthält das Empfangssignal nicht nur Informationen über die Ausgestaltung des Barcode-Symbols 2 welches abgetastet wurde, sondern auch Informationen über den Sendelichtstrahl 8 und das Empfangselement 4. Dieses Empfangssignal wird im Analog-Digitalwandler 15 digitalisiert, dem FIR-Filter und schließlich der Rechnereinheit zugeführt. Zudem ist das Konstrastmuster des Barcode-Symbols 2 in der Rechnereinheit gespeichert.

In der Rechnereinheit werden die Lagen der Wendepunkte des Empfangssignals ermittelt und mit den Positionen der Übergänge von schwarzen zu weißen Linienelementen 2a, b verglichen. Aus der Abweichung dieser Positionen wird die Dekodiersicherheit der Vorrichtung 1 ermittelt.

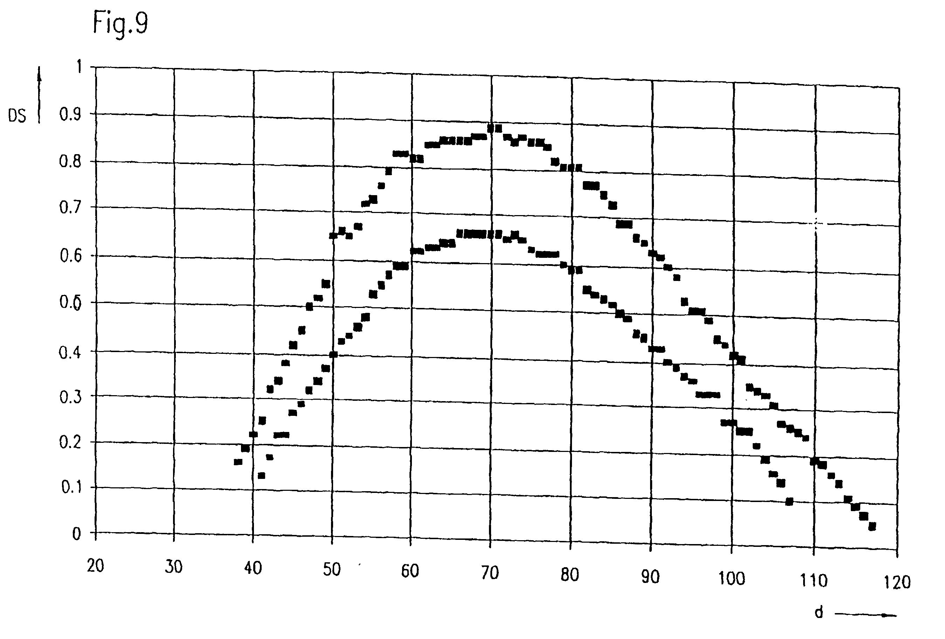

Dieses Verfahren wird für verschiedene Leseabstände wiederholt, so daß die Dekodiersicherheit in Abhängigkeit des Leseabstands d in der Rechnereinheit vorliegt. Ein Beispiel für die so ermittelte Dekodiersicherheit in Abhängigkeit des Leseabstands ist in Fig. 9 (untere Kurve) dargestellt.

Die Koeffizienten $h_m$ des Filters 16 sind auf vorgegebene Werte eingestellt, die die Anfangsbedingung für das nachfolgende Variationsverfahren bilden. Zweckmäßigerweise wird als Anfangsbedingung der Wert eines der Koeffizienten $h_m$ des Filters 16 auf 1 gesetzt, während die restlichen Koeffizienten $h_m$ den Wert 0 annehmen.

Die Variation der Koeffizienten $h_m$ des FIR-Filters erfolgt in der Rechnereinheit nach dem Verfahren der Entwurfszentrierung (DCA = design centering analysis). Die zuvor ermittelte Dekodiersicherheit in Abhängigkeit des Abstands d wird als Eingangsgröße verwendet. Mit dieser Information werden die Koeffizienten $h_m$ des FIR-Filters nach dem Zufallsprinzip geändert. Dann werden diejenigen Parametersätze gespeichert, die zu einer Dekodiersicherheit führen, die einen vorgegebenen Mindestwert überschreiten.

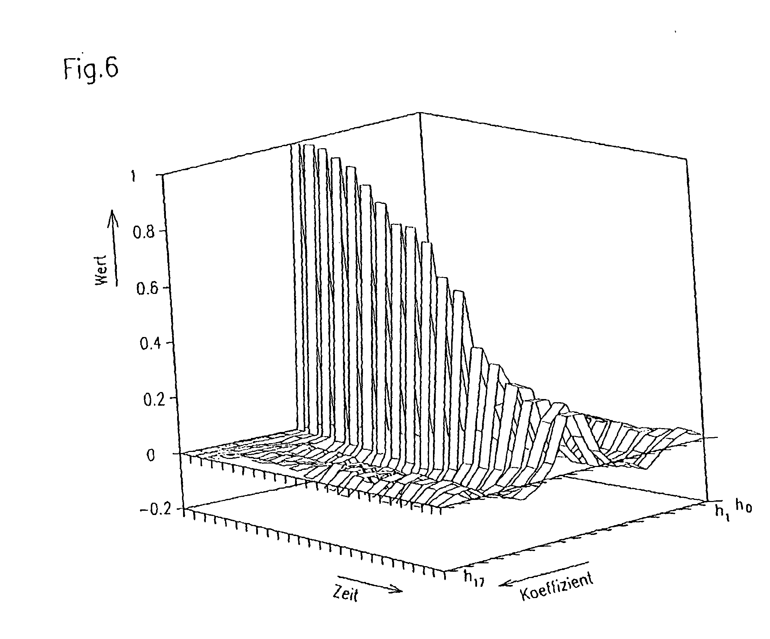

Dieses Verfahren wird in mehreren Iterationsschritten wiederholt, wobei jeweils die in der Rechnereinheit ermittelte Dekodiersicherheit des vorher gehenden Iterationsschrittes für den aktuellen Iterationsschritt verwendet wird. Die Iteration wird dann abgebrochen. wenn die Dekodiersicherheit einen vorgegebenen Sollwert überschreitet. Die zeitliche Veränderung der Koeffizienten des FIR-Filters während der einzelnen Iterationsschritte ist in Fig. 6 dargestellt.

Zweckmäßigerweise wird die Optimierung der Koeffizienten des Filters nicht nur für einen Leseabstand, sondern für einen vorgegebenen Abstandsbereich durchgeführt, wobei der Sollwert für die Dekodiersicherheit für jeden Leseabstand erreicht werden muß.

Auf diese Weise kann das digitale Filter 16 so dimensioniert werden, daß die Dekodiersicherheit in einem vorgegebenen Lese-Abstandsbereich verbessert wird. Die Ergebnisse einer solchen Variation sind in Fig. 9 (obere Kurve) dargestellt. Alternativ kann die Dekodiersicherheit nur für einen bestimmten Leseabstand optimiert werden. In diesem Fall können höhere Dekodiersicherheiten von nahezu DS = 1 erzielt werden, da die Dekodiersicherheit nur für einen Leseabstand d optimiert werden muß.

Desweiteren können in die Variation unterschiedliche Barcode-Symbole 2 eingehen.

Schließlich können anstelle einer experimentellen Bestimmung der Sendelichtstrahldurchmesser und die Übertragungsfunktion des Empfangselements 4 in einem Simulationsmodell als Modellgrößen vorgegeben werden.

Damit können die Koeffizienten des digitalen Filters 16 bestimmt werden, ohne daß eine reale Abtastung des Barcode-Symbols 2 zu erfolgen braucht.

Ferner ist vorteilhaft, daß die Übertragungsfunktion des Empfangselements 4 im Gesamtmodell innerhalb einer vorgegebenen Bandbreite vorgegeben werden können. Damit können Einflüsse von Exemplarstreuungen auf die Dekodiersicherheit kompensiert werden.

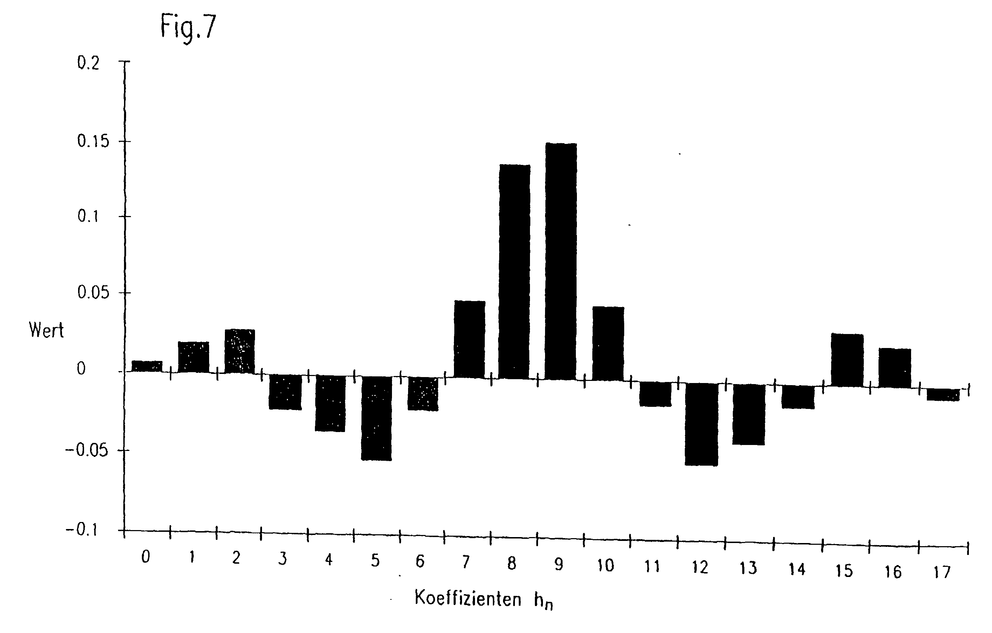

In Fig. 7 ist ein Beispiel eines optimierten Satzes der Koeffizienten $h_m$ des digitalen Filters 16 dargestellt. Die Koeffizienten sind bezüglich des Mittelpunkts bzw. der Mittelsenkrechten asymmetrisch ausgebildet. Durch den asymmetrischen Anteil der Koeffizienten $h_m$ werden Phasenverzerrungen des Empfangssignals die durch das Empfangselement 4 bewirkt werden, eliminiert.

Durch den symmetrischen Anteil der Koeffizienten $h_m$ werden Amplitudenverzerrungen des Empfangssignals, die durch den endlichen Durchmesser des Sendelichtstrahls 8 und das Empfangselement 4 hervorgerufen werden, eliminiert.

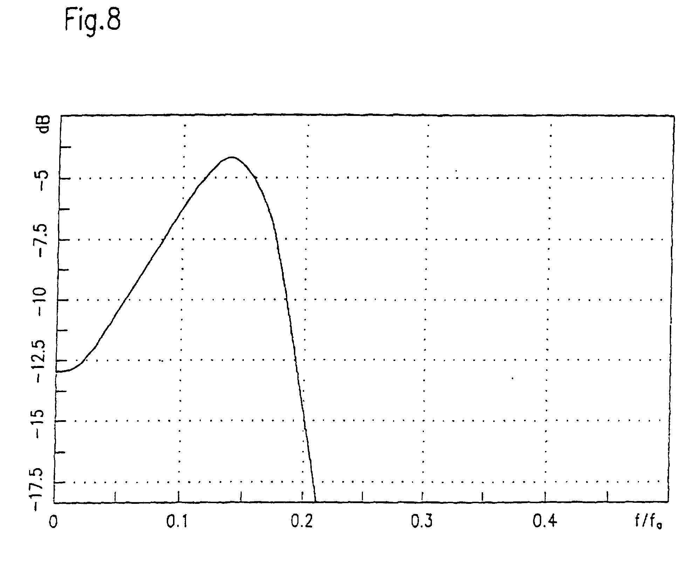

In Fig. 8 ist die Übertragungsfunktion des digitalen Filters 16 dargestellt, die sich aus der Fouriertransformierten der Koeffizienten des digitalen Filters 16 gemäß Fig. 7 ergibt. Im vorliegenden Ausführungsbeispiel beträgt die Frequenz $f_a$ = 10 MHz.

Die Übertragungsfunktion entspricht im wesentlichen dem Inversen des Frequenzspektrums der räumlichen Verteilung des Sendelichtstrahls 8, die im wesentlichen eine Gaußcharakteristik aufweist. Abweichungen hiervon rühren von den Signalverzerrungen durch das Empfangselement 4.

Dies bedeutet, daß durch die experimentelle Erfassung aller externer Systemgrößen im gesamten Frequenzbereich deren Einfluß auf das Empfangssignal genau erfaßt und durch das Variationsverfahren eliminiert werden kann.

Nach erfolgter Optimierung der Koeffizienten $h_m$ des digitalen Filters 16 wird die Rechnereinheit von der Vorrichtung 1 getrennt. Während des Betriebs der Vorrichtung 1 wird der optimierte Koeffizientensatz $h_m$ des digitalen Filters 16 beibehalten. Eine Nachregelung der Koeffizienten $h_m$ des digitalen Filters 16 und damit der Übertragungsfunktion ist insbesondere dann nicht notwendig, wenn die Koeffizienten $h_m$ für verschiedene Leseabstände d und Barcode-Symbole 2 optimiert werden.

**Patentansprüche**

1. Optoelektronische Vorrichtung zum Erkennen von mit definierten Kontrastmustern versehenen Marken, mit einem einen Sendelichtstrahl emittierenden Sendeelement und einem Empfangselement, wobei der Sendelichtstrahl über die Marken geführt wird und der von einer Marke reflektierte Empfangslichtstrahl eine durch den Kontrast der Marke aufgeprägte und vom räumlichen Intensitätsverlauf des Sendelichtstrahls abhängige Amplitudenmodulation aufweist, und wobei das Empfangslicht im Empfangselement in ein analoges Empfangssignal umgesetzt wird, dadurch gekennzeichnet, daß das analoge Empfangssignal in einem n-bit-Analog-Digitalwandler (15), dessen Wortbreite n größer als eins ist, in ein digitales Empfangssignal umgesetzt wird, welches einem digitalen Filter (16) zugeführt wird, dessen Übertragungscharakteristik im wesentlichen dem Inversen des Frequenzspektrums der räumlichen Intensitätsverteilung des Sendelichtstrahls (8) am Ort der Marke entspricht.

2. Vorrichtung nach Anspruch 1, dadurch gekennzeichnet, daß die Übertragungscharakteristik des digitalen Filters (16) innerhalb eines vorgegebenen Toleranzbereichs dem Inversen des Frequenzspektrums der räumlichen Intensitätsverteilung des Empfangslichts (10) für einen vorgegebenen Bereich des Abstands der Marke von der Vorrichtung (1) entspricht.

3. Vorrichtung nach Anspruch 1 oder 2, dadurch gekennzeichnet, daß die Übertragungscharakteristik des digitalen Filters (16) zur Kompensation bauteilbedingter Störungen des Empfangssignals vom Inversen des Frequenzspektrums' der räumlichen Intensitätsverteilung des Sendelichtstrahls (8) am Ort der Marke definierte Abweichungen aufweist, die den Umkehrfunktionen der Übertragungsfunktionen der Bauteile entsprechen.

4. Vorrichtung nach Anspruch 3, dadurch gekennzeichnet, daß das signalverzerrende Bauteil vom Empfangselement (4) gebildet ist.

5. Vorrichtung nach einem der Ansprüche 1 - 4, dadurch gekennzeichnet, daß das digitale Filter (16) von einem FIR-Filter mit einstellbaren Koeffizienten gebildet ist.

6. Vorrichtung nach Anspruch 5, dadurch gekennzeichnet, daß das FIR-Filter als Filter 18. Grades ausgebildet ist.

7. Vorrichtung nach einem der Ansprüche 1 - 6, dadurch gekennzeichnet, daß die Wortbreite des n-bit Analog-Digitalwandlers (15) im Bereich $8 \leq n \leq 12$ liegt.

8. Vorrichtung nach einem der Ansprüche 1- 7, dadurch gekennzeichnet, daß diese als Barcode-Lesegerät ausgebildet ist, dessen Sendeelement (3) einen als Laser ausgebildeten Sender (6) aufweist, dessen Sendelichtstrahl (8) über eine Ablenkeinheit (9) abgelenkt wird, und dessen Empfangselement (4) eine Fotodiode (11) und einen Verstärker (12) zur Verstärkung des Empfangssignals aufweist.

9. Verfahren zur Reduktion von Signalverzerrungen für eine optoelektronische Vorrichtung (1) gemäß einem der vorhergehenden Ansprüche, gekennzeichnet durch folgende Verfahrensschritte:

    - Modellierung des Gesamtsystems der optoelektronischen Vorrichtung (1) bestehend aus dem Frequenzspektrum der räumlichen Intensitätsverteilung des Sendelichtstrahls (8) am Ort der Marke sowie der Übertragungsfunktionen der signalverzerrenden Bauelemente und des digitalen Filters (16),

    - einer experimentellen Bestimmung der Dekodiersicherheit der Vorrichtung (1) in Abhängigkeit des Leseabstands d der Marken von der Vorrichtung (1) für eine bestimmte Voreinstellung des digitalen Filters (16), wobei die Dekodiersicherheit der Grad der Übereinstimmung der Amplitudenmodulation des Empfangssignals mit dem Kontrastmuster der Marken ist.

    - Variation der einstellbaren Koeffizienten des digitalen Filters (16) bei vorgegebener Übertragungsfunktion der signalverzerrenden Bauelemente und vorgegebenem Frequenzspektrum der räumlichen Intensitätsverteilung des Sendelichtstrahls (8) am Ort der Marke bis die Dekodiersicherheit einen vorgegebenen Schwellwert überschritten hat.

10. Verfahren nach Anspruch 9, dadurch gekennzeichnet, daß als Anfangsbedingung einer der Koeffizienten des digitalen Filters (16) auf den Wert eins und die restlichen Koeffizienten auf den Wert null gesetzt werden.

11. Verfahren nach Anspruch 9 oder 10, dadurch gekennzeichnet, daß die Variation der Koeffizienten nach dem Verfahren der Entwurfszentrierung erfolgt.

12. Verfahren nach einem der Ansprüche 9 -11, dadurch gekennzeichnet, daß die Variation der Koeffizienten des digitalen Filters (16) für eine vorgegebenen Abstand d der Marke zur Vorrichtung (1) und für ein vorgegebenes Kontrastmuster der Marke erfolgt.

13. Verfahren nach einem der Ansprüche 9-11, dadurch gekennzeichnet, daß die Variation der Koeffizienten des digitalen Filters (16) für mehrere, innerhalb eines vorgegebenen Bereichs liegende Abstände d und für verschiedene Kontrastmuster der Marken erfolgt, bis für jeden der Abstandswerte und jedes Kontrastmuster die Dekodiersicherheit einen vorgegebenen Schwellwert überschritten hat.

14. Verfahren nach einem der Ansprüche 9 - 13, dadurch gekennzeichnet, daß die Bestimmung der Werte für die Dekodiersicherheit in der Vorrichtung (1) erfolgt.

15. Verfahren nach einem der Ansprüche 9 - 14, dadurch gekennzeichnet, daß die Übertragungsfunktion der signalverzerrenden Bauelemente experimentell ermittelt werden.

16. Verfahren nach einem der Ansprüche 9 - 15, dadurch gekennzeichnet, daß die Übertragungsfunktion der signalverzerrenden Bauelemente innerhalb einer vorgegebenen Bandbreite im Modell des Gesamtsystems vorgegeben ist wobei die Bandbreite den Exemplarstreuungen der Bauelement entspricht.

**Claims**

1. Opto-electronic device for recognition of marks provided with defined contrast patterns, comprising a transmitting element emitting a transmitted light beam and a receiving element, wherein the emitted light beam is guided over the marks and the received light beam reflected by a mark has an amplitude modulation imposed by the contrast of the mark and dependent on the spatial course of intensity of the emitted light beam, and wherein the received light is converted in the receiving element into an analog received signal, characterised in that the analog received signal is converted in an n bit analog digital converter (15), the word width n of which is greater than one, into a digital received signal which is fed to a digital filter (16), the transfer characteristic of which substantially corresponds to the inverse of the frequency spectrum of the spatial intensity distribution of the transmitted light beam (8) at the location of the mark.

2. Device according to claim 1, characterised in that the transfer characteristic of the digital filter (16) within a predetermined tolerance range corresponds to the inverse of the frequency spectrum of the spatial intensity distribution of the received light (10) for a predetermined range of the spacing of the mark from the device (1).

3. Device according to claim 1 or 2, characterised in that the transfer characteristic of the digital filter (16) has, for compensation for disturbances of the received signal caused by components, defined deviations, which correspond to the reverse functions of the transfer functions of the components, from the inverse of the frequency spectrum of the spatial intensity distribution of the transmitted light beam (8) at the location of the mark.

4. Device according to claim 3, characterised in that the signal-distorting component is formed by the receiving element (4).

5. Device according to one of claims 1 to 4, characterised in that the digital filter (16) is formed by an FIR filter with settable coefficients.

6. Device according to claim 5, characterised in that the FIR filter is formed as a filter of 18th gradient.

7. Device according to one of claims 1 to 6, characterised in that the word width of the n bit analog-to-digital converter (15) lies in the range of n equal to at least 8 and at most 12.

8. Device according to one of claims 1 to 7, characterised in that this is constructed as a bar code reading device, the transmitting element (3) of which comprises a transmitter (6), which is constructed as a laser and the transmitted light beam (8) of which is deflected by way of a deflecting unit (9), and the receiving element (4) of which comprises a photodiode (11) and an amplifier (12) for amplification of the received signal.

9. Method of reducing signal distortions for an optoelectronic device (1) according to one of the preceding claims, characterised by the following method steps:

- modelling of the entire system of the opto-electronic device (1) consisting of the frequency spectrum of the spatial intensity distribution of the transmitted light beam (8) at the location of the mark as well as the transfer functions of the signal-distorting components and of the digital filter (16),

- an experimental determination of the decoding reliability of the device (1) in dependence on the reading distance d of the marks from the device (1) for a defined presetting of the digital filter (16), wherein the decoding reliability is the degree of agreement of the amplitude modulation of the received signal with the contrast pattern of the marks,

- variation of the settable coefficients of the digital filter (16) for a preset transfer function of the signal-distorting components and preset frequency spectrum of the spatial intensity distribution of the transmitted light beam (8) at the location of the mark until the decoding reliability has exceeded a preset threshold value.

10. Method according to claim 9, characterised in that as a starting condition one of the coefficients of the digital filter (16) is set to the value one and the remaining coefficients are set to the value zero.

11. Method according to claim 9 or 10, characterised in that the variation of the coefficients takes place in accordance with the method of design centring.

12. Method according to one of claims 9 to 11, characterised in that the variation of the coefficients of the digital filter (16) is carried out for a predetermined distance d of the mark from the device (1) and for a predetermined contrast pattern of the mark.

13. Method according to one of claims 9 to 11, characterised in that the variation of the coefficients of the digital filter (16) is carried out for several distances d disposed within a predetermined range and for different contrast patterns of the marks until the decoding reliability has exceeded a predetermined threshold value for each of the distance values and each of the contrast patterns.

14. Method according to one of claims 9 to 13, characterised in that the determination of the values for the decoding reliability takes place in the device (1).

15. Method according to one of claims 9 to 14, characterised in that the transfer function of the signal-distorting components is ascertained experimentally.

16. Method according to one of claims 9 to 15, characterised in that the transfer function of the signal-distorting components is preset within a predetermined bandwidth in the model of the overall system, wherein the bandwidth corresponds to the divergences of examples of the component.

**Revendications**

1. Dispositif optoélectronique d'identification de marques pourvues de motifs de contraste définis, avec un élément d'émission émettant un rayon ou faisceau lumineux d'émission, et avec un élément récepteur, le faisceau lumineux d'émission étant déplacé au-dessus de la marque, et dans lequel le faisceau lumineux de réception, réfléchi par la marque, présente une modulation d'amplitude imprimée par le contraste de la marque et dépendante de la variation spatiale de l'intensité du rayon de lumière émis et dans lequel la lumière reçue est convertie dans l'élément récepteur en un signal de réception analogique, caractérisé en ce que le signal de réception analogique est converti en un signal de réception numérique dans un convertisseur analogique-numérique à $n$ bits (15), dont la largeur de mot $n$ est supérieure à un, et transféré vers un filtre numérique (16) dont la caractéristique de transmission correspond essentiellement à l'inverse du spectre fréquentiel de la répartition spatiale de l'intensité du rayon lumineux d'émission (8) à l'endroit de la marque.

2. Dispositif selon la revendication 1, caractérisé en ce que la caractéristique de transmission du filtre numérique (16), au sein d'une marge de tolérance prédéfinie, correspond à l'inverse du spectre fréquentiel de la répartition spatiale de l'intensité du rayon lumineux de réception (10) pour un domaine prédéfini de la distance entre la marque et le dispositif (1).

3. Dispositif selon la revendication 1 ou 2, caractérisé en ce que la caractéristique de transmission du filtre numérique (16) pour la compensation des perturbations du signal de réception, dues aux composants, présente des écarts définis par l'inverse du spectre fréquentiel de la répartition spatiale de l'intensité du faisceau lumineux d'émission (8) à l'endroit de la marque, qui correspondent aux fonctions d'inversion des fonctions de transmission des composants.

4. Dispositif selon la revendication 3, caractérisé en ce que le composant produisant une distorsion du signal est constitué par le récepteur (4).

5. Dispositif selon l'une des revendications 1 à 4, caractérisé en ce que le filtre numérique (16) est constitué par un filtre FIR aux coefficients réglables.

6. Dispositif selon la revendication 5, caractérisé en ce que le filtre FIR est constitué par un filtre du 18ème degré.

7. Dispositif selon l'une des revendications 1 à 6, caractérisé en ce que la largeur de mot du convertisseur analogique-numérique à $n$ bits (15) est comprise entre $8 \leq n \leq 12$.

8. Dispositif selon l'une des revendications 1 à 7, caractérisé en ce qu'il est réalisé en tant que lecteur de codes-barres, dont l'élément d'émission (3) présente un émetteur (6) réalisé sous la forme d'un laser, dont le faisceau de lumière émise (8) est dévié par une unité de déflexion (9), et dont l'élément de réception (4) présente une photodiode (11) et un amplificateur (12) pour l'amplification du signal de réception.

9. Procédé de réduction de distorsions de signaux pour dispositif optoélectronique (1) selon l'une quelconque des revendications précédentes, caractérisé en ce qu'il présente les étapes suivantes :

   - Modélisation du système d'ensemble du dispositif optoélectronique (1) constitué du spectre fréquentiel de la répartition spatiale de l'intensité du faisceau lumineux d'émission (8) à l'endroit de la marque, ainsi que des fonctions de transmission des composants produisant une distorsion du signal, et du filtre numérique (16).
   - Détermination expérimentale de la fiabilité de décodage du dispositif (1) en fonction de la distance de lecture d de la marque au dispositif (1) pour un certain préréglage du filtre numérique (16), cette fiabilité de décodage correspondant au degré de concordance de la modulation d'amplitude du signal de réception avec le motif de contraste de la marque.
   - Variation des coefficients réglables du filtre numérique (16) pour une fonction de transmission donnée des composants produisant une distorsion du signal, et pour un spectre fréquentiel donné de la répartition spatiale de l'intensité du faisceau lumineux d'émission (8) à l'endroit de la marque, jusqu'à dépassement du seuil prédéfini de la fiabilité de décodage.

10. Procédé selon la revendication 9, caractérisé en ce que l'on attribue, comme condition initiale, à l'un des coefficients du filtre numérique (16) la valeur un, et la valeur zéro à tous les coefficients restants.

11. Procédé selon la revendication 9 ou 10, caractérisé en ce que la variation des coefficients a lieu selon le principe de conception centralisée.

12. Procédé selon l'une des revendications 9 à 11, caractérisé en ce que la variation des coefficients du filtre numérique (16) a lieu pour une distance d entre la marque et le dispositif (1) prédéfinie et pour un motif de contraste prédéfini de la marque.

13. Procédé selon l'une des revendications 9 à 11, caractérisé en ce que la variation des coefficients du filtre numérique (16) a lieu pour plusieurs distances d à l'intérieur d'un domaine prédéfini, et pour différents motifs de contraste des marques, jusqu'à dépassement d'un seuil prédéfini de la fiabilité de décodage pour chacune des distances et chacun des motifs de contraste.

14. Procédé selon l'une des revendications 9 à 13, caractérisé en ce que la détermination des valeurs de la fiabilité de décodage a lieu au sein du dispositif (1).

**15.** Procédé selon l'une des revendications 9 à 14, caractérisé en ce que la fonction de transmission des composants produisant une distorsion du signal est déterminée par voie expérimentale.

**16.** Procédé selon l'une des revendications 9 à 15, caractérisé en ce que la fonction de transmission des composants produisant une distorsion du signal est prédéfinie à l'intérieur d'une largeur de bande prédéfinie appliquée au modèle du système d'ensemble, cette largeur de bande correspondant aux coefficients de dispersion unitaires des composants.

Fig.1

Fig.2

Fig.3

Fig.4

Fig.5

Barcodesymbol

Barcode-abtastung → Empfangs-element → Analog-Digital-wandler → FIR-Filter → Bestimmung der Wende-punkte → Bestimmung des Kanten-fehlers

Abstand

h0 −−−−− h17

DCA

Dekodier-sicherheit

EP 0 728 340 B1

Fig.6

Fig.7

Fig.8

Fig.9

EP 0 728 340 B1